# EUROPEAN PATENT SPECIFICATION

(11) **EP 4 127 102 B1**
(45) Date of publication and mention of the grant of the patent: **21.05.2025**
(21) Application number: 20928609.5
(22) Date of filing: 23.12.2020
(51) Int. Cl.: C10B 53/07, C10G 1/00, C10G 1/10, C08F 10/02, C10G 51/04

(54) **CIRCULAR ECONOMY FOR PLASTIC WASTE TO POLYETHYLENE VIA REFINERY FCC OR FCC/ALKYLATION UNITS**
KREISLAUFWIRTSCHAFT FÜR KUNSTSTOFFABFÄLLE ZU POLYETHYLEN ÜBER RAFFINERIE-FCC- ODER FCC-ALKYLIERUNGSANLAGEN
ÉCONOMIE CIRCULAIRE DES DÉCHETS PLASTIQUES EN POLYÉTHYLÈNE PAR L'INTERMÉDIAIRE D'UNITÉS DE FCC OU D'ALKYLATION/FCC DE RAFFINERIE

(30) Priority: 30.03.2020 US 202063002053 P; 30.03.2020 US 202063002020 P
(43) Date of publication of application: 08.02.2023
(60) Divisional application: 24215447.4
(73) Proprietor: Chevron U.S.A. Inc., San Ramon, CA 94583 (US)
(72) Inventor: TIMKEN, Hye-Kyung, San Ramon, CA 94583 (US); MCCORD, Cameron, San Ramon, CA 94583 (US)
(74) Representative: Haseltine Lake Kempner LLP
(86) International application number: PCT/US2020/066822
(87) International publication number: WO 2021/201932

(56) References cited:
- US-A1- 2006 089 518
- US-A1- 2019 177 626
- US-A1- 2019 367 428
- US-A1- 2019 367 428
- PALL CORPORATION: "REFINERIES APPLICATION FOCUS - HF ALKYLATION PALL CORPORATION", 1 October 2018 (2018-10-01), XP093101978, Retrieved from the Internet <URL:https://www.pall.com/content/dam/pall/oil-gas/literature-library/non-gated/pdf/refinery-hf-alkylation.pdf> [retrieved on 20231115]
- ANONYMOUS: "Refineries: Application Focus - HF Alkylation", PALL CORPORATION, October 2018 (2018-10-01), XP055838145, Retrieved from the Internet <URL:https://www.pall.co.uk/content/dam/pall/oil-gas/literature-library/non-gated/pdf/refinery-hf-alkylation.pdf> [retrieved on 20210219]
- SEAMAN GREG: "Plastics by the Numbers | Eartheasy Guides & Articles", 2 May 2020 (2020-05-02), pages 1 - 15, XP055936680, Retrieved from the Internet <URL:https://learn.eartheasy.com/articles/plastics-by-the-numbers> [retrieved on 20220629]

## Description

### BACKGROUND

The world has seen extremely rapid growth of plastics production. According to PlasticsEurope Market Research Group, the world plastics production was 335 million tons in 2016, 348 million tons in 2017 and 359 million tons in 2018. According to McKinsey & Company, the global plastics-waste volume was estimated about 260 million tons per year in 2016, and projected to be 460 million tons per year by 2030 if the current trajectory continues.

Single use plastic waste has become an increasingly important environmental issue. At the moment, there appear to be few options for recycling polyethylene and polypropylene waste plastics to value-added chemical and fuel products. Currently, only a small amount of polyethylene and polypropylene is recycled via chemical recycling, where recycled and cleaned polymer pellets are pyrolyzed in a pyrolysis unit to make fuels (naphtha, diesel), stream cracker feed or slack wax.

Processes are known which convert waste plastic into hydrocarbon lubricants. For example, U.S. Pat. No. 3,845,157 discloses cracking of waste or virgin polyolefins to form gaseous products such as ethylene/olefin copolymers which are further processed to produce synthetic hydrocarbon lubricants. U.S. Pat. No. 4,642,401 discloses the production of liquid hydrocarbons by heating pulverized polyolefin waste at temperatures of 150-500° C and pressures of 20-300 bars. U.S. Pat. No. 5,849,964 discloses a process in which waste plastic materials are depolymerized into a volatile phase and a liquid phase. The volatile phase is separated into a gaseous phase and a condensate. The liquid phase, the condensate and the gaseous phase are refined into liquid fuel components using standard refining techniques. U.S. Pat. No. 6,143,940 discloses a procedure for converting waste plastics into heavy wax compositions. U.S. Pat. No. 6,150,577 discloses a process of converting waste plastics into lubricating oils. EP0620264 discloses a process for producing lubricating oils from waste or virgin polyolefins by thermally cracking the waste in a fluidized bed to form a waxy product, optionally using a hydrotreatment, then catalytically isomerizing and fractionating to recover a lubricating oil.

Other documents which relate to processes for converting waste plastic into lubricating oils include U.S. Patent Nos. 6,288,296; 6,774,272; 6,822,126; 7,834,226; 8,088,961; 8,404,912; and 8,696,994; and U.S. Patent Publication Nos. 2019/0161683; 2016/0362609; 2016/0264885; and 2019/0177626.

The current method of chemical recycling via pyrolysis cannot make a big impact for the plastics industry. The current pyrolysis operation produces poor quality fuel components (naphtha and diesel range products), but the quantity is small enough that these products can be blended into fuel supplies. However, this simple blending cannot continue if very large volumes of waste polyethylene and polypropylene are to be recycled to address environmental issues. The products as produced from a pyrolysis unit are of too poor quality to be blended in large amounts (for example 5-20 vol. % blending) in transportation fuels.

In order to achieve recycling of single use plastics in an industrially significant quantity to reduce its environmental impact, more robust processes are needed. The improved processes should establish "circular economy" for the waste polyethylene and polypropylene plastics where the spent waste plastics are recycled effectively back as starting materials for the polymers and high value byproducts.

### SUMMARY

The present invention is defined herein and by the appended claims. Provided is a continuous process for converting waste plastic into recycle for polyethylene polymerization. The process comprises selecting waste plastics containing polyethylene and/or polypropylene. These waste plastics are then passed through a pyrolysis reactor to thermally crack at least a portion of the polyolefin waste and produce a pyrolyzed effluent. The pyrolyzed effluent is separated into offgas, a pyrolysis oil and optionally pyrolysis wax comprising a naphtha/diesel and heavy fraction, and char.

The incorporation of the process with an oil refinery is an important aspect of the present process, and allows the creation of a circular economy with a single use waste plastic such as polyethylene. Thus, the pyrolysis oil and wax, the entire liquid fraction from the pyrolysis unit, is passed to a refinery FCC unit from which can be recovered liquid petroleum olefin streams. These liquid petroleum olefin streams can be passed directly to a steam cracker for ethylene production, or to a refinery alkylation unit from which is recovered an alkylate gasoline and nC₄ fraction. This fraction nC₄ is then passed to a steam cracker for ethylene production.

In one embodiment, the pyrolysis oil and wax, the entire liquid fraction from the pyrolysis unit, is passed to a refinery FCC Feed Pretreater Unit. This unit is effective in removing sulfur, nitrogen, phosphorus, silica, dienes and metals that will hurt a FCC unit catalyst performance. Also this unit hydrogenates aromatics and improves the liquid yield of the FCC unit. The pretreated hydrocarbon from the pretreater unit is distilled to produce LPG, naphtha and heavy fraction. The heavy fraction is sent to an FCC unit for further production of C₃, C₄, FCC gasoline and heavy fraction. From the separation section, clean C₃ LPG fraction containing propane and propylene is collected. The C₃ stream is a good feed for a steam cracker. The C₃ stream is fed to a steam cracker distillation section to separate into propane and propylene. Then, propane is fed to the steam cracker to be converted to pure ethylene.

The refinery will generally have its own hydrocarbon feed flowing through the refinery units. The flow volume of pyrolysis oil and wax generated from the pyrolysis of waste plastic to the refinery units can comprise any practical or accommodating volume % of the total flow to the refinery units. Generally, the flow of the pyrolysis oil and wax generated from the waste plastic pyrolysis, for practical reasons, can be up to about 50 vol. % of the total flow, i.e., the refinery flow and the pyrolysis flow. In one embodiment, the flow of the pyrolysis oil and wax is an amount up to about 20 vol. % of the total flow.

In another embodiment, a continuous process for converting waste plastic comprising polyethylene into recycle for polyethylene polymerization is provided. The process comprises selecting waste plastics containing polyethylene and polypropylene and then passing the waste plastics through a pyrolysis reactor to thermally crack at least a portion of the polyolefin waste and produce a pyrolyzed effluent. The pyrolyzed effluent is separated into offgas, a pyrolysis oil comprising a naphtha/diesel fraction and a heavy fraction, and char. The pyrolysis oil, the entire liquid and wax fraction from the pyrolysis unit, is passed to a refinery FCC unit. The FCC unit will eliminate any contaminants in the pyrolysis oil and convert it into FCC hydrocarbon product. The FCC product is sent to the FCC unit separation section to produce offgas, C₃, C₄, FCC gasoline and heavy fractions. From the separation section, a clean C₃ liquid petroleum gas (LPG) fraction containing propane and propylene is collected. The C₃ stream is a good feed for a steam cracker. The C₃ stream is fed to a steam cracker distillation section to separate into propane and propylene. Then, propane is fed to the steam cracker reactor to be converted to pure ethylene.

The C₄ LPG fraction recovered contains butanes and butenes and is sent to an alkylation unit to produce n-butane and alkylate. These streams are rich in linear paraffins and a very good naphtha feed for a stream cracker to generate ethylene.

The FCC gasoline is sent to a gasoline blending pool. A portion of the alkylate gasoline recovered from the alkylation unit can be combined/blended with the FCC gasoline fraction. The heavy portion of the hydrocarbon from the FCC unit distillation is sent to appropriate refinery units for upgrading into clean gasoline and diesel.

In another embodiment, prior to passing on to the FCC unit, the pyrolysis oil and wax, the entire liquid fraction from the pyrolysis unit, is passed to a refinery FCC Feed Pretreater Unit. This unit is effective in removing sulfur, nitrogen, phosphorus, silica, dienes and metals that will hurt a FCC catalyst performance. Also this unit hydrogenates aromatics and improves the liquid yield of the FCC unit. The pretreated hydrocarbon from this unit is distilled to produce LPG, naphtha and heavy fraction. The heavy fraction is sent to the FCC unit for further production of C₃, C₄, FCC gasoline and heavy fraction. From the separation section, clean C₃ LPG fraction containing propane and propylene is collected. The C₃ stream is separated into C₃ paraffin and C₃ olefin fractions. This can be accomplished by use of a distillation column in the ethylene cracker. The C₃ propane stream is fed to a steam cracker distillation section to be further converted to pure ethylene.

Among other factors, it has been found that by adding refinery operations one can upgrade the waste pyrolysis oil and wax to higher value products such as gasoline and diesel. Also, by adding refinery operations it has been found that clean naphtha (C₅-C₈) or C₄ or C₃ can be efficiently and effectively produced from the waste pyrolysis oil for ultimate polyethylene polymer production. Positive economics are realized for the overall process from recycled plastics to a polyethylene product with product quality identical to that of virgin polymer.

### BRIEF DESCRIPTION OF THE DRAWINGS

FIG. 1 depicts the current practice of pyrolyzing waste plastics to produce fuel or wax (base case).
FIG. 2 depicts a present process for establishing a circular economy for waste plastics in accordance with the present processes.
FIG. 3 depicts a present process for establishing a circular economy for waste plastics in accordance with the present processes, using a FCC feed pretreater.
FIG. 4 depicts a present process for establishing a circular economy for waste plastics in accordance with the present processes, the process involving an alkylation unit.
FIG. 5 depicts the plastic type classification for waste plastics recycling.

### DETAILED DESCRIPTION

In the present process, provided is a method to recycle waste polyethylene and/or polypropylene back to virgin polyethylene to establish the circular economy by combining distinct industrial processes. A substantial portion of polyethylene and polypropylene polymers are used in single use plastics and get discarded after its use. The single use plastic waste has become an increasingly important environmental issue. At the moment, there appear to be few options for recycling polyethylene and polypropylene waste plastics to value-added chemicals and fuel products. Currently, only a small amount of polyethylene/polypropylene is recycled via chemical recycling, where recycled and cleaned polymer pellets are pyrolyzed in a pyrolysis unit to make fuels (naphtha, diesel), steam cracker feed or slack wax.

Ethylene is the most produced petrochemical building block. Ethylene is produced in hundreds of millions of tons per year via steam cracking. The steam crackers use either gaseous feedstocks (ethane, propane and/or butane) or liquid feed stocks (naphtha or gas oil). It is a noncatalytic cracking process operating at very high temperatures, up to 850° C.

Polyethylene is used widely in various consumer and industrial products. Polyethylene is the most common plastic, over 100 million tons of polyethylene resins are produced annually. Its primary use is in packaging (plastic bags, plastic films, geomembranes, containers including bottles, etc.). Polyethylene is produced in three main forms: high-density polyethylene (HDPE, ~ 0.940-0.965 g/cm⁻³), linear low-density polyethylene (LLDPE, ~0.915-0.940 g/cm⁻³) and low-density polyethylene (LDPE, (< 0.930 g/cm⁻³), with the same chemical formula (C₂H₄)ₙ but different molecular structure. HDPE has a low degree of branching with short side chains while LDPE has a very high degree of branching with long side chains. LLDPE is a substantially linear polymer with significant numbers of short branches, commonly made by copolymerization of ethylene with short-chain alpha-olefins.

Low density polyethylene (LDPE) is produced via radical polymerization at 150 - 300° C and very high pressure of 1,000-3,000 atm (101-304 MPa). The process uses a small amount of oxygen and/or organic peroxide initiator to produce polymer with about 4,000 - 40,000 carbon atoms per the average polymer molecule, and with many branches. High density polyethylene (HDPE) is manufactured at relatively low pressure (10-80 atm, 1-8 MPa) and 80-150° C temperature in the presence of a catalyst. Ziegler-Natta organometallic catalysts (titanium(III) chloride with an aluminum alkyl) and Phillips-type catalysts (chromium(IV) oxide on silica) are typically used, and the manufacturing is done via a slurry process using a loop reactor or via a gas phase process with a fluidized bed reactor. Hydrogen is mixed with ethylene to control the chain length of the polymer. Manufacturing conditions of linear low-density polyethylene (LLDPE) is similar to those of HDPE except copolymerization of ethylene with short-chain alpha-olefins (1-butene or 1-hexene).

Today, only a small portion of spent polyethylene products is collected for recycling efforts due to the inefficiencies discussed above.

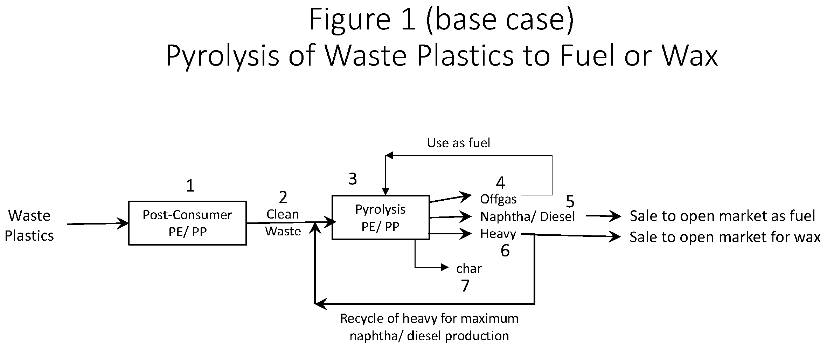

FIG. 1 shows a diagram of pyrolysis of waste plastics fuel or wax that is generally operated in the industry today. As noted above, generally, polyethylene and polypropylene wastes are sorted together 1. The cleaned polyethylene/polypropylene waste 2 is converted in a pyrolysis unit 3 to offgas 4 and pyrolysis oil (liquid product). The offgas 4 from the pyrolysis unit is used as fuel to operate the pyrolysis unit. A distillation unit in the pyrolysis unit separates the pyrolysis oil to produce naphtha and diesel 5 products which are sold to fuel markets. The heavy pyrolysis oil fraction 6 is recycled back to the pyrolysis unit 3 to maximize the fuel yield. Char 7 is removed from the pyrolysis unit 3. The heavy fraction 6 is rich in long chain, linear hydrocarbons, and is very waxy (i.e., forms paraffinic wax upon cooling to ambient temperature). Wax can be separated from the heavy fraction 6 and sold to the wax markets.

The present process converts pyrolyzed polyethylene and/or polypropylene waste plastic in large quantities by integrating the waste polymer pyrolysis product streams into an oil refinery operation. The resulting processes produce the feedstocks for the polymers (naphtha or C₃-C₄ or C₃ only for ethylene cracker), high quality gasoline and diesel fuel.

Generally, the present process provides a circular economy for polyethylene plants. Polyethylene is produced via polymerization of pure ethylene. Clean ethylene can be made using a steam cracker. Either naphtha or a C₃ or C₄ stream can be fed to the steam cracker. The ethylene is then polymerized to create polyethylene.

By adding refinery operations to upgrade the waste pyrolysis oil to higher value products (gasoline and diesel) and to produce clean LPG and naphtha for steam cracker for ultimate polyethylene polymer production, one is able to create positive economics for the overall process from recycled plastics to polyethylene product with quality identical to that of the virgin polymer.

A pyrolysis unit produces poor quality products containing contaminants, such as calcium, magnesium, chlorides, nitrogen, sulfur, dienes, and heavy components, which products cannot be used in large quantity for blending in transportation fuels. It has been discovered that by having these products go through the refinery units, the contaminants can be captured in pre-treating units and their negative impacts diminished. The fuel components can be further upgraded with appropriate refinery units with chemical conversion processes, with the final transportation fuels produced by the integrated process being of higher quality and meeting the fuels quality requirements. The present process will upgrade the wax into valuable gasoline and diesel. The integrated process will generate much cleaner naphtha stream as steam cracker feedstock for ethylene generation and polyethylene production. These large on-spec productions allow "cyclical economy" for the recycle plastics feasible.

The carbon in and out of the refinery operations are "transparent," meaning that all the molecules from the waste plastic do not necessarily end up in the exact olefin product cycled back to the polyolefin plants, but are nevertheless assumed as "credit" as the net "green" carbon in and out of the refinery is positive. With these integrated processes, the amount of virgin feeds needed for polyethylene plants will be reduced substantially.

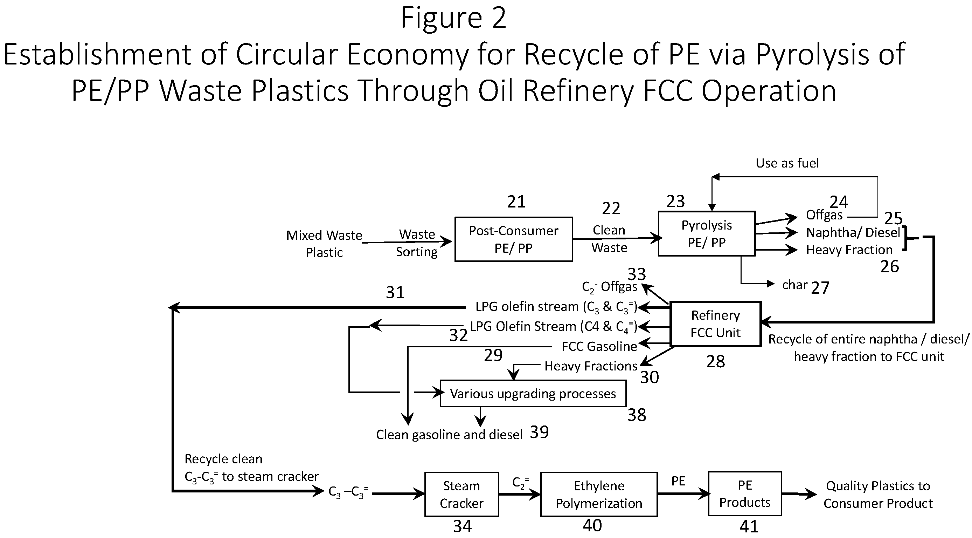

FIG. 2, FIG. 3, and FIG. 4 show present integrated processes, integrating refinery operations with recycle for effective polyethylene production. In FIG. 2, FIG. 3, and FIG. 4, mixed waste plastics are sorted together 21. The cleaned waste plastic 22 is converted in a pyrolysis unit 23 to offgas 24 and a pyrolysis oil (liquid product) and optionally wax (solid product at ambient temperature). The offgas 24 from the pyrolysis unit can be used as fuel to operate the pyrolysis unit 23. The pyrolysis oil is separated, generally at an on-site distillation unit in the pyrolysis unit 23, into a naphtha/diesel fraction 25, and a heavy fraction 26. Char 27 is removed from the pyrolysis unit 23 after completion of the pyrolysis step.

The pyrolysis unit can be located near the waste plastics collection site, which site could be away from a refinery, near a refinery, or within a refinery. If the pyrolysis unit is located away from the refinery, then pyrolysis oil (naphtha/diesel and heavies) can be transferred to the refinery by truck, barge, rail car or pipeline. It is preferred, however, that the pyrolysis unit is within the waste plastics collection site or within the refinery.

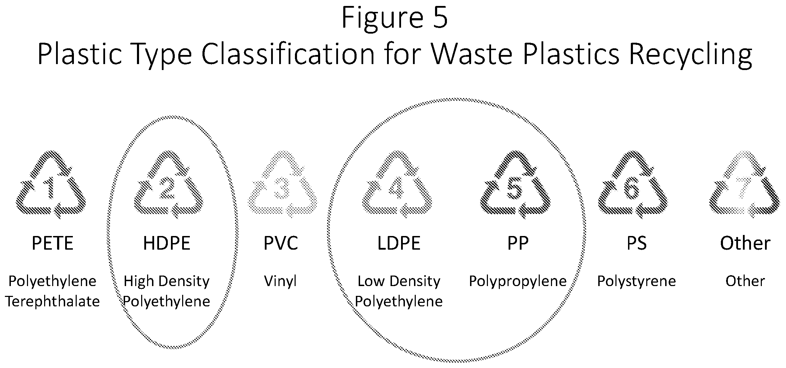

The preferred starting material for the present process is sorted waste plastics containing predominantly polyethylene and polypropylene (plastics recycle classification types 2, 4, and 5). The pre-sorted waste plastics are washed and shredded or pelleted to feed to a pyrolysis unit for thermal cracking. FIG. 5 depicts the plastic type classification for waste plastics recycling. Classification types 2, 4, and 5 are high density polyethylene, low density polyethylene and polypropylene, respectively. Any combination of the polyethylene and polypropylene waste plastics can be used. For the present process, at least some polyethylene waste plastic is preferred.

Proper sorting of waste plastics is very important in order to minimize contaminants such as N, Cl, and S. Plastics waste containing polyethylene terephthalate (plastics recycle classification type 1), polyvinyl chloride (plastics recycle classification type 3) and other polymers (plastics recycle classification type 7) need to be sorted out to less than 5%, preferably less than 1% and most preferably less than 0.1%. The present process can tolerate a moderate amount of polystyrene (plastics recycle classification type 6). Waste polystyrene needs to be sorted out to less than 30%, preferably less than 20% and most preferably less than 5%.

Washing of waste plastics removes metal contaminants such as sodium, calcium, magnesium, aluminum, and non-metal contaminants coming from other waste sources. Non-metal contaminants include contaminants coming from the Periodic Table Group IV, such as silica, contaminants from Group V, such as phosphorus and nitrogen compounds, contaminants from Group VI, such as sulfur compounds, and halide contaminants from Group VII, such as fluoride, chloride, and iodide. The residual metals, non-metal contaminants, and halides need to be removed to less than 50 ppm, preferentially less than 30ppm and most preferentially to less than 5ppm.

If the washing does not remove the metals, non-metal contaminants, and halide impurities adequately, then a separate guard bed can be used to remove the metals and non-metal contaminants.

The pyrolyzing is carried out by contacting a plastic material feedstock in a pyrolysis zone at pyrolysis conditions, where at least a portion of the feed(s) is cracked, thus forming a pyrolysis zone effluent comprising primarily olefins and paraffins. Pyrolysis conditions include a temperature of from about 400° C to about 700° C, preferably from about 450° C to about 650° C. Conventional pyrolysis technology teaches operating conditions of above-atmospheric pressures. *See e.g.,* U.S. Pat. No. 4,642,401. Additionally, it has been discovered that by adjusting the pressure downward, the yield of a desired product can be controlled. *See, e.g.,* U.S. Pat. No. 6,150,577. Accordingly, in some embodiments where such control is desired, the pyrolysis pressure is sub-atmospheric.

FIG. 2 shows one present integrated process where the entire pyrolysis oil (naphtha/diesel fraction and heavy fraction) is sent to a fluid catalytic cracking (FCC) unit 28.

The fluid catalytic cracking (FCC) process is widely used in the refining industry for conversion of atmospheric gas oil, vacuum gas oil, atmospheric residues and heavy stocks recovered from other refinery operations into high-octane gasoline, light fuel oil, heavy fuel oil, olefin-rich light gas (LPG) and coke. FCC uses a high activity zeolite catalyst to crack the heavy hydrocarbon molecules at a 950-990° F (510-532°C) reactor temperature in a riser with a short contact time of a few minutes or less. LPG streams containing olefins (propylene, butylene) are commonly upgraded to make alkylate gasoline, or to be used in chemicals manufacturing. A conventional FCC unit is used.

The refinery will generally have its own hydrocarbon feed flowing through the refinery units. The flow volume of pyrolysis oil and wax generated from the pyrolysis of waste plastic to the refinery units, here an FCC unit, can comprise any practical or accommodating volume % of the total flow to the refinery units. Generally, the flow of the pyrolysis oil and wax fraction generated from the waste plastic pyrolysis, for practical reasons, can be up to about 50 vol. % of the total flow, i.e., the refinery flow and the pyrolysis flow. In one embodiment, the flow of the pyrolysis oil is an amount up to about 20 vol. % of the total flow. In another embodiment, the flow of the pyrolysis oil and wax is an amount up to about 10 vol. % of the total flow. About 20 vol. % has been found to be an amount that is quite practical in its impact on the refinery while also providing excellent results and being an amount that can be accommodated. The amount of pyrolysis oil and wax generated from the pyrolysis can of course be controlled so that the fraction passed to the refinery units provides the desired volume % of the flow.

Cracking of the pyrolysis liquid oil and wax combined with petroleum derived oil in the FCC unit produces liquefied petroleum gas (LPG) olefin streams 31 and 32, as well as a gasoline 29 and heavy fraction 30. A C₂⁻ offgas 33 is also produced.

The LPG olefin stream 31 is a C₃ liquid petroleum gas (LPG) fraction containing propane and propylene. This C₃ stream is a good feed for a steam cracker. The C₃ stream 31 is fed to a steam cracker 34 distillation section to separate into propane and propylene. Then, propane is fed to the reactor of steam cracker 34, there C₃ stream is ultimately converted to pure ethylene which is then polymerized 40. The polyethylene can then be used to produce polyethylene products 41.

The FCC gasoline 29 can be sent to a gasoline blending pool. The heavy portion 30 recovered from the FCC unit 28 is sent to appropriate refinery units 38 for upgrading into clean gasoline and diesel 39. The C₄ stream 32 is either sent to a gasoline blending pool or further upgraded into clean gasoline.

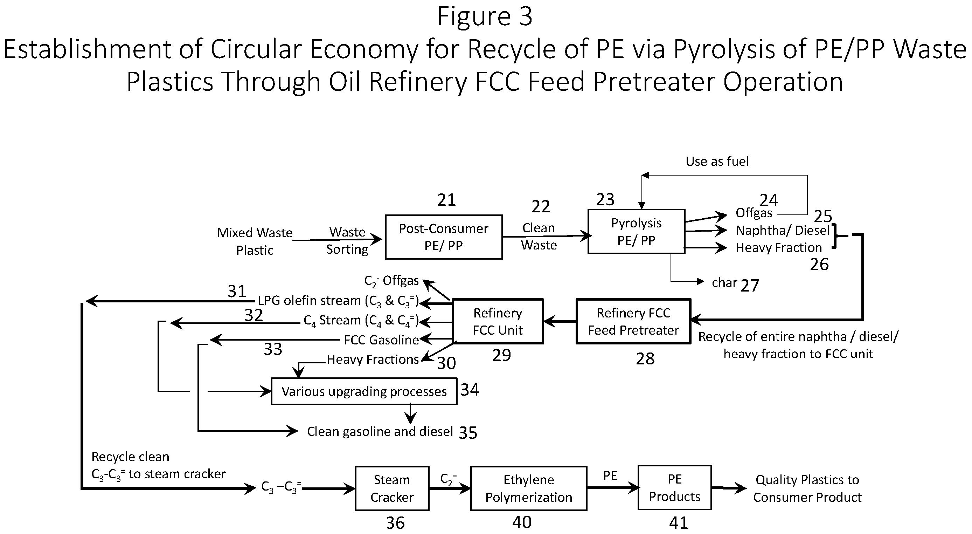

FIG. 3 shows a present integrated process where the entire pyrolysis oil (naphtha/diesel fraction and heavy fraction) is sent to a fluid catalytic cracking (FCC) feed pretreater unit 28, prior to a FCC unit. The FCC Feed Pretreater typically uses a bimetallic (NiMo or CoMo) alumina catalyst in a fixed bed reactor to hydrogenate the feed with H₂ gas flow at a 660-780° F (349-416 °C) reactor temperature and 1,000-2,000 psi pressure (7-14 MPa). The refinery FCC Feed Pretreater Unit is effective in removing sulfur, nitrogen, phosphorus, silica, dienes and metals that will hurt the FCC unit catalyst performance. Also this unit hydrogenates aromatics and improves the liquid yield of the FCC unit.

The pretreated hydrocarbon from the feed pretreater unit is distilled to produce LPG, naphtha and heavy fraction. The heavy fraction is sent to a FCC unit 29 for further production of C₃ 31, C₄ 32, FCC gasoline 33 and heavy fraction 30. The C₄ stream and naphtha from the feed pretreater unit can be passed to other upgrading processes within the refinery.

From the separation section of the FCC unit 29, clean C₃ LPG fraction 31 containing propane and propylene is collected. The C₃ stream is a good feed for a stream cracker. The C₃ stream is fed to a steam cracker 36 distillation section to separate into propane and propylene. Then, propane is fed to the steam cracker to be converted to pure ethylene. The ethylene is then polymerized in an ethylene polymerization unit 40. The polyethylene can then be used to make consumer products 41.

The C₄ olefin stream 32 recovered from the FCC refinery unit can be passed to various upgrading processes 34 to produce clean gasoline or diesel 35. The heavy fraction 30 can be passed on to the various upgrading processes 34 as well to produce more clean gasoline and diesel 35. The FCC gasoline 33 collected from the FCC refinery unit 29 can be pooled with clean gasoline produced in the refinery.

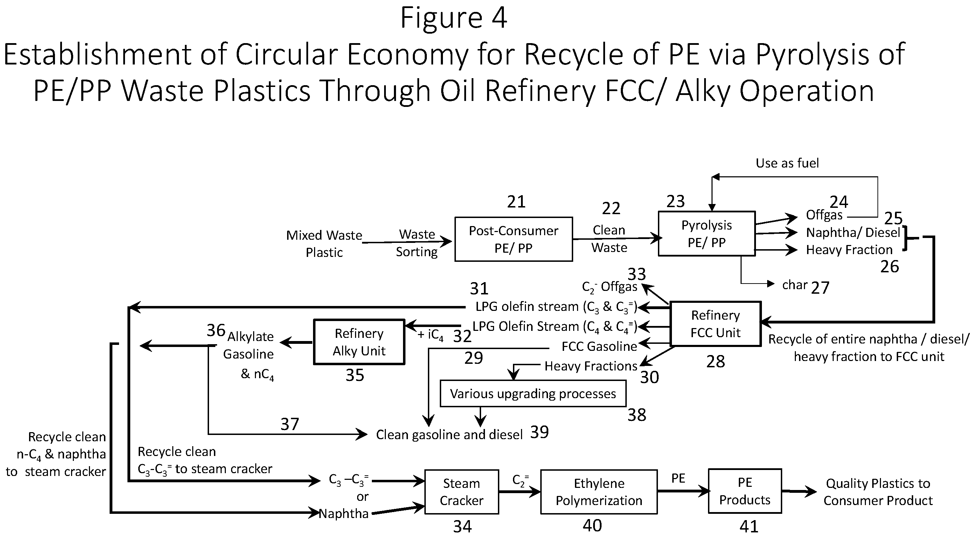

FIG. 4 shows a present integrated process where the entire pyrolysis oil (naphtha/diesel fraction and heavy fraction) is sent to a fluid catalytic cracking (FCC) unit 28 and then to an alkylation unit 35.

Similar to FIG. 2, cracking of the pyrolysis liquid oil and wax combined with petroleum derived oil in the FCC unit produces liquefied petroleum gas (LPG) olefin streams 31 and 32, as well as a gasoline 29 and heavy fraction 30. A C₂⁻ offgas 33 is also produced.

The LPG olefin stream 31 is a C₃ liquid petroleum gas (LPG) fraction containing propane and propylene. This C₃ stream is a good feed for a steam cracker. The C₃ stream 31 is fed to a steam cracker 34. In the steam cracker 34, the C₃ stream is converted to pure ethylene which is then polymerized 40. The polyethylene can then be used to produce polyethylene products 41.

The LPG olefin stream 32 is a C₄ liquid petroleum gas (LPG) fraction containing butanes and butenes. This fraction can be sent to a refinery alkylation unit 35.

An alkylation process combines light olefins (propylene, butylene, typically from FCC unit) with isobutane to produce highly branched paraffinic fuel, alkylate gasoline. Alkylate gasoline is clean-burning, high-octane, low-sulfur, low-RVP gasoline blending component that does not contain olefinic or aromatic compounds, thus is a very desirable gasoline blending component. Conventional alkylation processes use either sulfuric acid catalyst which operates at 30 - 60° F (-1-16°C) reactor temperature or hydrofluoric acid catalyst that operates at 90-95° F (32-35°C) reactor temperature. A conventional alkylation process can be used.

In the present process, an alkylate fraction comprising n-butane 36 is recovered from the alkylation unit 35. This fraction is rich in linear paraffins and a very good naphtha feed for the steam cracker 34 to generate ethylene. This n-butane feed 36 is therefore passed to the steam cracker 34 to produce ethylene, which is then polymerized 40. The polyethylene can then be used to produce consumer products 41.

The FCC gasoline 29 can be sent to a gasoline blending pool. A portion of the alkylate (alkylate gasoline) recovered from the alkylation unit can be combined/blended with the FCC gasoline fraction. The heavy portion 30 recovered from the FCC unit 28 is sent to appropriate refinery units 38 for upgrading into clean gasoline and diesel 39.

The steam cracker and ethylene polymerization unit is preferably located near the refinery so that the feedstocks (propane, butane, naphtha, propane/propylene mix) can be transferred via pipeline. For a petrochemical plant located away from the refinery, the feedstock can be delivered via truck, barge, rail car, or pipeline.

The benefits of a circular economy and an effective and efficient recycling campaign are realized by the present integrated processes.

The following examples are provided to further illustrate the present process and its benefits. The examples are meant to be illustrative and not limiting.

### Example 1: Properties of Pyrolysis Oil and Wax From Commercial Sources

Pyrolysis oil and wax samples were obtained from commercial sources and their properties are summarized in Table 1. These pyrolysis samples were prepared from waste plastics containing mostly polyethylene and polypropylene via thermal decomposition in a pyrolysis reactor at around 400-600° C, near atmospheric pressure without any added gas or a catalyst. A pyrolysis unit typically produces gas, liquid oil product, optionally wax product, and char. The pyrolysis unit's overhead gas stream containing thermally cracked hydrocarbon was cooled to collect condensate as pyrolysis oil (liquid at ambient temperature) and/or pyrolysis wax (solid at ambient temperature). The pyrolysis oil is the main product of the pyrolysis units. Some units produce pyrolysis wax as a separate product in addition to the pyrolysis oil.

**Table 1**

| **Properties of As-Received Oil and Wax from Pyrolysis of Waste Plastics** | | | | | | |
|---|---|---|---|---|---|---|
| | | Pyrolysis Oil Sample A | Pyrolysis Oil Sample B | Pyrolysis Oil Sample C | Pyrolysis Oil Sample D | Pyrolysis Wax Sample E |
| Specific Gravity at 60 °F(16°C) | | 0.814 | 0.820 | 0.774 | - | 0.828 |

| Simulated Distillation, °F (°C) | | | | | | |
|---|---|---|---|---|---|---|
| 0.5% (Initial Boiling Point) | | 87(31) | 299(148) | 18(-8) | 86(30) | 325(163) |
| 5% | | 179(92) | 306(152) | 129(54) | 154(68) | 475(246) |
| 10% | | 214(101) | 309(154) | 156(69) | 210(99) | 545(285) |
| 30% | | 322(161) | 346(174) | 285(141) | 304(151) | 656(347) |
| 50% | | 421(216) | 447(231) | 392(200) | 421(216) | 733(389) |
| 70% | | 545(285) | 585(307) | 517(269) | 532(278) | 798(426) |
| 90% | | 696(369) | 798(426) | 663(351) | 676(358) | 894(479) |
| 95% | | 772(411) | 883(473) | 735(391) | 743(395) | 939(504) |
| 99.5% (Final Boiling Point) | | 942(506) | 1079(582) | 951(511) | 888(476) | 1064(573) |

| Carlo-Erba Hydrocarbon Analysis | | | | | | |
|---|---|---|---|---|---|---|
| | Carbon, wt% | 87.6 | 84.21 | 85.46 | 85.97 | 85.94 |
| | Hydrogen, wt% | 12.7 | 12.25 | 14.1 | 14.0 | 14.15 |
| | Sum of C + H, wt% | 100.3 | 96.46 | 99.5 | 100.0 | 100.1 |
| | H/C Molar Ratio | 1.73 | 1.75 | 1.98 | 1.96 | 1.98 |
| Bromine Number, g/ 100 g | | 49 | 60 | 40 | 44 | 14 |

| Hydrocarbon Type | | | | | | |
|---|---|---|---|---|---|---|
| Total Aromatics, vol% | | 23.3 | 22.8 | 5.1 | 8.7 | 13.3 |
| Total Olefins & Naphthenes, vol% | | 39.0 | 50.2 | 42.4 | 38.2 | 42.1 |
| Total Paraffins, vol% | | 37.7 | 27 | 52.5 | 53.1 | 44.6 |

| Contaminants | | | | | | |
|---|---|---|---|---|---|---|
| | Total S, ppm | 48 | 29 | 7.8 | 99 | 6.3 |
| | Total N, ppm | 751 | 1410 | 318 | 353 | 237 |
| | Total Cl, ppm | 113 | 62 | 41 | 70 | 4.7 |
| O in naphtha & distillate, ppm | | 250 | - | 574 | - | - |

| Trace Elemental Impurities | | | | | | |
|---|---|---|---|---|---|---|
| | Al, ppm | <1.1 | <0.56 | 0.6 | <0.53 | <0.68 |
| | Ca, ppm | 1.4 | 11.5 | <0.5 | <0.53 | <0.68 |
| | Fe, ppm | 4.9 | 11.9 | 1.6 | <1.1 | 3.1 |
| | Mg, ppm | <0.51 | 1.3 | <0.52 | <0.53 | <0.68 |
| | Na, ppm | 2.5 | <0.54 | <1.1 | <2.2 | <2.7 |
| | Ni, ppm | <0.51 | <0.54 | <0.52 | 2 | <0.68 |
| | V, ppm | <0.51 | <0.54 | <0.52 | 4 | <0.68 |
| | P, ppm | 8.2 | 9.9 | <1.6 | <2.2 | 20.2 |
| | Si, ppm | 82.5 | 49.6 | 13 | 17 | 3.1 |

ASTM D4052 method was used for specific gravity measurements. Simulated boiling point distribution curve was obtained using ASTM D2887 method. Carlo-Erba analysis for carbon and hydrogen was based on ASTM D5291 method. Bromine number measurement was based on ASTM D1159 method. Hydrocarbon-type analysis was done using a high resolution magnetic mass spectrometer using the magnet scanned from 40 to 500 Daltons. Total sulfur was determined using XRF per ASTM D2622 method. The nitrogen was determined using a modified ASTM D5762 method using chemiluminescence detection. The total chloride content was measured using combustion ion chromatography instrument using modified ASTM 7359 method. The oxygen content in naphtha and distillate boiling range was estimated using GC by GC/MS measurements with electron ionization detector for m/Z range of 29-500. Trace metal and non-metal elements in oil were determined using inductively coupled plasma-atomic emission spectrometry (ICP-AES).

Industrial pyrolysis process of sorted plastics, sourced predominantly from polyethylene and polypropylene waste, produced quality hydrocarbon streams with specific gravity ranging 0.7 to 0.9, and a boiling range from 18 to 1100° F (-8 to 593°C) as in pyrolysis oil or pyrolysis wax.

The pyrolysis product is rather pure hydrocarbon made of mostly carbon and hydrogen. The hydrogen to carbon molar ratio varies from 1.7 to near 2.0. The Bromine Number is in the range of 14 through 60 indicating varying degrees of unsaturation coming from olefins and aromatics. The aromatic content is in the range of 5 to 23 volume % with a higher severity unit producing more aromatics. Depending on the process conditions of the pyrolysis unit, the pyrolysis products show paraffinic content ranging from mid-20 vol. % to mid-50 vol. %. The pyrolysis product contains a substantial amount of olefins. Samples A and B, pyrolysis oil produced under more severe conditions such as higher pyrolysis temperature and/or longer residence time, contain higher aromatic and lower paraffinic components, resulting H/C molar ratio of around 1.7 and high Bromine Number of 50-60. Samples C and D were produced at less severe conditions, and the pyrolysis oils are more paraffinic, resulting H/C molar ratio of close to 2.0 and Bromine Number around 40. Sample E, pyrolysis wax, is mostly paraffinic, saturated hydrocarbon with a substantial amount of normal hydrocarbons (as opposed to branched hydrocarbons) with low Bromine Number of only 14.

The following Examples 2 through 5 show the evaluation of waste plastics pyrolysis oil for transportation fuel.

### Example 2: Fractionation of Pyrolysis Oil for Evaluation As Transportation Fuel

Sample D was distilled to produce hydrocarbon cuts representing gasoline (350° F⁻,177°C⁻), jet (350 - 572° F, 177 - 300°C), diesel (572 - 700° F, 300 - 371°C) and the heavy (700° F⁺, 371°C⁺) fractions. Table 2 summarizes the boiling point distribution and impurity distributions among the distilled product fractions.

**Table 2**

| **Distillation of Pyrolysis Oil into Fuel Fractions** | | | | | |
|---|---|---|---|---|---|
| Sample ID | Sample D | Sample F | Sample G | Sample H | Sample I |
| Intended Fraction | | Gasoline Cut | Jet Cut | Diesel Cut | Unconverted |
| Cut Point Target, °F (°C) | | 350⁻ (177⁻) | 350-572 (177-300) | 572-700 (300-371) | 700⁺ (371⁺) |
| Distillation Actual Yields, wt% | | 37.2 | 38.0 | 15.0 | 9.3 |
| Simulated Distillation, F (°C) | | | | | |
| IBP (0.5 wt%) | 86(30) | 27(-3) | 299(148) | 539(282) | 640(338) |
| 5 wt% | 154(68) | 98(37) | 345(174) | 557(292) | 684(362) |
| 10 wt% | 210(99) | 147(64) | 365(185) | 574(301) | 696(369) |
| 30 wt% | 304(151) | 222(106) | 416(213) | 597(314) | 727(386) |
| 50 wt% | 421(216) | 270(132) | 457(236) | 619(326) | 758(403) |
| 70 wt% | 532(278) | 291(144) | 492(256) | 644(340) | 808(431) |
| 90 wt% | 676(358) | 337(169) | 546(286) | 674(357) | 898(481) |
| 95 wt% | 743(395) | 347(175) | 554(290) | 683(362) | 953(512) |
| FBP (99.5 wt%) | 888(476) | 385(196) | 591(311) | 711(377) | 1140(616) |
| Total S, ppm | 99 | 52 | 35 | 80 | 320 |
| Total N, ppm | 353 | 215 | 556 | 232 | 467 |
| Total Cl, ppm | 70 | 181 | 27 | 12 | 13 |

### Example 3: Evaluation of Pyrolysis Oil Cut for Gasoline Fuel

Sample F, a pyrolysis oil cut for gasoline fuel boiling range, was evaluated to assess its potential to use as gasoline fuel. Sample F has the carbon number range of C5 - C12, typical of the gasoline fuel.

Due to the olefinic nature of the pyrolysis oil, oxidation stability (ASTM D525) and gum forming tendency (ASTM D381) were identified as the most critical properties to examine. Research octane number (RON) and motor octane number (MON) are also the critical properties for engine performance. The RON and MON values were estimated from detailed hydrocarbon GC analysis.

**Table 3**

| **Evaluation of Pyrolysis Oil Naphtha Fraction for Gasoline Fuel** | | | | |
|---|---|---|---|---|
| | Oxidation Stability, min | Washed Gum, mg/100 mL | RON | MON |
| Sample F | 90 | 5.0 | 71.4 | 67.7 |
| Reference gasoline | >1440 | 1 | 95.8 | 86.2 |
| 4/96 vol.% Blend of Sample F with reference gasoline | >1440 | 2.0 | 94.5 | 85.1 |
| 15/85 vol.% Blend of Sample F with reference gasoline | >1440 | 2.2 | 91.8 | 83.1 |

Sample F, a pyrolysis oil cut for gasoline fuel boiling range, cannot be used by itself as automotive gasoline fuel due to its poor quality. The gasoline fraction from the pyrolysis oil showed very poor oxidation stability in that Sample F failed only after 90 min compared to the target stability of longer than 1440 minutes. The pyrolysis gasoline exceeded the wash gum target of 4 mg/ 100 mL suggesting severe gum forming tendency. The pyrolysis gasoline has poor octane numbers compared to the reference gasoline. A premium unleaded gasoline was used as the reference gasoline.

We also examined the potential of blending of the pyrolysis gasoline cut for a limited amount to the reference gasoline. Our study showed that possibly up to 15 volume % of Sample F can be blended to the refinery gasoline while still meeting the fuels property targets. By integrating the pyrolysis gasoline product with a refinery fuel, the overall product quality can be maintained.

These results indicate that the as-produced gasoline fraction of pyrolysis oil has limited utility as gasoline fuel. Upgrading in a refinery unit is preferred to convert this gasoline fraction of the pyrolysis oil into hydrocarbon that meets the gasoline fuel property targets.

### Example 4: Evaluation of Pyrolysis Oil Cut for Jet Fuel

Sample G, a pyrolysis oil cut for jet fuel boiling range, was evaluated to assess its potential to use as jet fuel. Sample G has the carbon number range of C9 - C18, typical of the jet fuel.

Due to the olefinic nature of the pyrolysis oil, jet fuel thermal oxidation test (D3241) was considered as the most critical test. The pyrolysis oil jet cut as-is, Sample G, had only 36 minutes of oxidation stability suggesting the pure pyrolysis jet cut is unsuitable for use as jet fuel.

We prepared a 5 volume % blend of pyrolysis jet cut (Sample G) with refinery produced jet. The blend still failed for the jet fuel oxidation test as shown in Table 4.

**Table 4**

| **Evaluation of Pyrolysis Oil Jet Fraction for Jet Fuel** | |
|---|---|
| | Jet Fuel Thermal Oxidation Test |
| Reference jet fuel | Passed |
| 5/95 vol.% Blend of Sample G with reference jet fuel | Failed |

These results indicate that the as-produced jet fraction of pyrolysis oil is completely unsuitable for jet fuel, and upgrading in a refinery unit is required to convert this jet fraction of the pyrolysis oil into hydrocarbon that meets the jet fuel property targets.

### Example 5: Evaluation of Pyrolysis Oil Cut for Diesel Fuel

Sample H, a pyrolysis oil cut for diesel fuel boiling range, was evaluated to assess its potential to use as diesel fuel. Sample H has the carbon number range of C14 - C24, typical of the diesel fuel.

Sample H contains a substantial amount of normal hydrocarbons. Since normal hydrocarbons tends to exhibit waxy characteristics, cold flow properties such as pour point (ASTM D5950-14) and cloud points (ASTM D5773) were considered as the most critical tests.

We prepared two blends at 10 and 20 volume % of Sample H with refinery produced diesel fuel. However, both blends still failed for the target pour point of less than -17.8° C (0° F) pour points.

**Table 5**

| **Evaluation of Pyrolysis Oil Diesel Fraction for Diesel Fuel** | | | |
|---|---|---|---|
| | Cloud Point (°C) | Pour Point (°C) | Pour Point Test |
| Reference diesel fuel | -17.1 | -19.0 | Passed |
| 10/90 vol.% Blend of Sample H with reference diesel fuel | -11.1 | -12.0 | Failed |
| 20/80 vol.% Blend of Sample H with reference diesel fuel | -5.5 | -7.0 | Failed |

These results indicate that the pyrolysis oil as-is is completely unsuitable for diesel fuel, and upgrading in a refinery unit is required to covert the diesel fraction of pyrolysis oil into hydrocarbon that meets the diesel fuel property targets.

### Examples 6: Coprocessing of Pyrolysis Product to FCC Unit or FCC Pretreater Unit

Results from Table 1 showed that industrial pyrolysis process of sorted plastics, sourced predominantly from polyethylene and polypropylene waste, produced quality pyrolysis oil or pyrolysis wax made of mostly carbon and hydrogen. With good sorting and efficient pyrolysis unit operation, the nitrogen and sulfur impurities are at low enough levels that a modern refinery can handle cofeeding of pyrolysis feedstocks to their processing units with no detrimental impacts.

However, some pyrolysis oils or wax may still contain high amounts of metals (Ca, Fe, Mg) and other non-metals (P, Si, Cl, O) that could negatively affect the performance of conversion units in a refinery. For pyrolysis products with high impurity levels are preferentially fed to a FCC feed treater unit before the FCC unit so that bulk of impurities are removed effectively by the pretreater.

By feeding the entire pyrolysis feedstock to a FCC unit as shown in Figure 2 or to a FCC pretreater unit before the FCC unit, the pyrolysis oil and wax are converted into offgas, LPG paraffins and olefins, FCC gasoline and heavy hydrocarbon components. The FCC gasoline is a valuable gasoline blending component. The heavy fractions, light cycle oil (LCO) and heavy cycle oil (HCO) are converted further in the subsequent conversion units including jet hydrotreating unit, diesel hydrotreating unit, hydrocracking unit and/or coker unit to make more gasoline, jet, and diesel fuel with satisfactory product properties. The LPG paraffins and olefins are either processed further in an alkylation unit or in part used for petrochemicals production with a recycle content.

The following Example 7 shows how the FCC feed pretreater can reduce the impurities in pyrolysis products. The reduction of impurities will extend the FCC catalyst life and lower the FCC catalyst consumption.

### Example 7: Hydrotreating of Pyrolysis Product for Impurity Removal

To study the effectiveness of hydrotreating of waste plastics pyrolysis product for impurity removal, Sample E, crude wax from the pyrolysis process, was hydrogenated in a continuous fixed bed unit containing a NiMo/Alumina catalyst at 600° F (316°C) reactor temperature and 600 psig pressure (4 MPa). A liquid feed flow rate of 1.0 hr⁻¹ relative to the catalyst bed volume and H₂/Hydrocarbon flow rate of 2500 scf/bbl (445 m³/m³) were used to produce the hydrogenated product, Sample J. The results are summarized below in Table 6.

**Table 6**

| **Hydrogenation of Pyrolysis Wax Before Cofeeding to FCC** | | | | |
|---|---|---|---|---|
| | | | Sample E | Sample J |
| Description | | | As-received Waxy Fraction | Hydrogenated Waxy Fraction (hydrogenated Sample E) |
| Simulated Distillation, °F(°C) | | | | |
| | 0.5% (Initial Boiling Point) | | 325(163) | 331(166) |
| | | 5% | 475(246) | 488(253) |
| | | 10% | 545(285) | 548(287) |
| | | 30% | 656(347) | 657(347) |
| | | 50% | 733(389) | 733(389) |
| | | 70% | 798(426) | 797(425) |
| | | 90% | 894(479) | 892(478) |
| | | 95% | 939(504) | 936(502) |
| | 99.5% (Final Boiling Point) | | 1064(573) | 1055(568) |
| Bromine Number, g/ 100 g | | | 14 | 0.14 |

| Contaminants | | | | |
|---|---|---|---|---|
| | | Total S, ppm | 6.3 | Below detection |
| | | Total N, ppm | 237 | <0.3 |
| | | Total Cl, ppm | 4.7 | Below detection |

| Trace Elemental Impurities | | | | |
|---|---|---|---|---|
| | | Fe, ppm | 3.1 | <1.1 |
| | | P, ppm | 20.2 | <2.2 |
| | | Si, ppm | 3.1 | <0.55 |
| Color & physical state at ambient temperature | | | Light brown solid | White solid |

Hydrogenation of pyrolysis wax, Sample E, produced excellent quality hydrogenated wax, Sample J. All trace impurities are completely removed by the hydrogenation process in that Sample J has no measurable impurities that could harm the FCC catalyst. This example shows that high quality, pure paraffinic hydrocarbon can be produced effectively from waste plastics containing predominately polyethylene and polypropylene, and that mild hydrogenation is a very effective method to purify the waste plastic derived oil and wax.

The following Examples 8 and 9 demonstrate the conversion of waste plastics pyrolysis product into quality transportation fuel in a refinery conversion unit, using a FCC unit as an example.

### Example 8: Conversion of Pyrolysis Oil in FCC

To study the impact of coprocessing of waste plastics pyrolysis oil to FCC, series of laboratory tests were carried out with Samples A and C. Vacuum gas oil (VGO) is the typical feed for FCC. FCC performances of 20 volume % blend of pyrolysis oil with VGO and pure pyrolysis oil were compared with that of the pure VGO feed.

The FCC experiments were carried out on a Model C ACE (advanced cracking evaluation) unit fabricated by Kayser Technology Inc. using regenerated equilibrium catalyst (Ecat) from a refinery. The reactor was a fixed fluidized reactor using N₂ as fluidization gas. Catalytic cracking experiments were carried out at the atmospheric pressure and 900° F reactor temperature. The cat/oil ratio was varied between 5 to 8 by varying the amount of the catalyst. A gas product was collected and analyzed using a refinery gas analyzer (RGA), equipped with GC with FID detector. In-situ regeneration of a spent catalyst was carried out in the presence of air at 1300° F, and the regeneration flue gas was passed through a LECO unit to determine the coke yield. A liquid product was weighted and analyzed in a GC for simulated distillation (D2887) and C₅⁻ composition analysis. With a material balance, the yields of coke, dry gas components, LPG components, gasoline (C5-430° F), light cycle oil (LCO, 430-650° F) and heavy cycle oil (HCO, 650° F⁺) were determined. The results are summarized below in Table 6.

**Table 7**

| **Evaluation of Pyrolysis Oil Cofeeding to FCC** | | | | | | |
|---|---|---|---|---|---|---|
| Feed | | 100% VGO | 20/80 vol% blend, Sample A/ VGO | 20/80 vol% blend, Sample C/ VGO | 100% Sample A | 100% Sample C |
| Cat/Oil, wt/wt | | 6.0 | 6.0 | 6.0 | 6.0 | 6.0 |
| Conversion, wt%* | | 81.3 | 83.15 | 83.09 | 76.1 | 78.82 |

| WLP Impurity** | | | | | | |
|---|---|---|---|---|---|---|
| Total O, ppm | | 81 | 76 | 62 | 54 | 67 |
| Total N, ppm | | 27 | 30 | 33 | 50 | 21 |

| Yields | | | | | | |
|---|---|---|---|---|---|---|
| Coke, wt% | | 4.45 | 4.35 | 4.20 | 3.56 | 2.90 |
| Total Dry Gas, wt% | | 2.08 | 1.96 | 1.93 | 1.55 | 1.43 |
| | Hydrogen | 0.16 | 0.12 | 0.12 | 0.05 | 0.04 |
| | Methane | 0.68 | 0.65 | 0.64 | 0.50 | 0.46 |
| | Ethane | 0.44 | 0.43 | 0.41 | 0.33 | 0.28 |
| | Ethylene | 0.76 | 0.74 | 0.72 | 0.63 | 0.61 |
| Total LPG, wt% | | 21.25 | 21.08 | 21.50 | 20.17 | 24.40 |
| | Propane | 1.78 | 1.76 | 1.72 | 1.47 | 1.53 |
| | Propylene | 5.53 | 5.51 | 5.56 | 5.57 | 6.75 |
| | n-Butane | 1.56 | 1.56 | 1.54 | 1.29 | 1.34 |
| | Isobutane | 6.61 | 6.48 | 6.64 | 5.43 | 6.61 |
| | C4 olefins | 5.77 | 5.77 | 6.04 | 6.41 | 8.16 |
| Gasoline, wt% | | 53.53 | 55.75 | 55.46 | 62.53 | 61.75 |
| LCO, wt% | | 12.89 | 12.23 | 11.93 | 10.37 | 8.03 |
| HCO, wt% | | 5.81 | 4.63 | 4.98 | 1.82 | 1.50 |
| Octane Number*** | | 88.05 | 84.57 | 82.79 | 73.75 | 75.41 |

| | | | | | | |
|---|---|---|---|---|---|---|
| *: Conversion - conversion of 430°F⁺(221°C⁺) fraction to 430°F⁻(221°C⁻) **: Impurity level of N and O in whole liquid product in fuels boiling range by GC x GC, ppm ***: Octane number, (R+M)/2, was estimated from detailed hydrocarbon GC of FCC gasoline. | | | | | | |

The results in Table 7 show that up to 20 volume % cofeeding of pyrolysis oil only makes very slight changes in the FCC unit performance indicating coprocessing of pyrolysis oil up to 20% is readily feasible. The 20 volume % blending of Sample A or Sample C led to very slight reduction of coke and dry gas yields, slight increase in gasoline yield and slight decrease in LCO and HCO, which are favorable in most situations. With paraffinic nature of pyrolysis oil, the 20% blends of A and C lowered the Octane number by about 3-5 numbers. With refinery operational flexibility, these octane number debits can be compensated with blending or feeding location adjustments.

The FCC unit cracks the pyrolysis oil info fuel range hydrocarbons, reduces impurities, and isomerize n-paraffins to isoparaffins. All these chemistry will improve the fuel properties of the pyrolysis oil and wax. By cofeeding the pyrolysis oil through the FCC process unit with a zeolite catalyst, the oxygen and nitrogen impurities in the fuel range were reduced substantially, from about 300-1400 ppm N to about 30 ppm N and from about 250-540 ppm O to about 60-80 ppm O. The hydrocarbon composition of all these cofeeding products are well within the typical FCC gasoline range.

The FCC runs of 100% pyrolysis oil showed substantial debits of Octane numbers by about 13-14 numbers. This shows that coprocessing of pyrolysis oil is preferred over processing of pure 100% pyrolysis oil.

### Example 9: Coprocessing of Pyrolysis Wax in FCC

To study the impact of coprocessing of waste plastics pyrolysis wax to FCC, series of laboratory tests were carried out with Sample E and VGO. FCC performances of 20% blend of pyrolysis wax with VGO and pure pyrolysis wax were compared with that of the pure VGO feed, similar to Example 8. The results are summarized below in Table 8.

**Table 8**

| **Evaluation of Pyrolysis Wax Cofeeding to FCC** | | | | |
|---|---|---|---|---|
| Feed | | 100% VGO | 20/80 vol% blend, Sample E/ VGO | 100% Sample E |
| Cat/Oil, wt/wt | | 6.5 | 6.5 | 6.5 |
| Conversion, wt%* | | 82.75 | 84.17 | 91.31 |

| Yields | | | | |
|---|---|---|---|---|
| Coke, wt% | | 4.78 | 4.76 | 4.26 |
| Total Dry Gas, wt% | | 2.11 | 2.05 | 1.79 |
| | Hydrogen | 0.16 | 0.14 | 0.07 |
| | Methane | 0.69 | 0.67 | 0.58 |
| | Ethane | 0.44 | 0.43 | 0.37 |
| | Ethylene | 0.78 | 0.77 | 0.73 |
| Total LPG, wt% | | 21.71 | 23.15 | 31.79 |
| | Propane | 1.87 | 1.93 | 2.28 |
| | Propylene | 5.54 | 5.98 | 8.59 |
| | n-Butane | 1.65 | 1.74 | 2.15 |
| | Isobutane | 6.91 | 7.25 | 8.88 |
| | C4 olefins | 5.74 | 6.25 | 9.89 |
| Gasoline, wt% | | 54.16 | 54.21 | 53.47 |
| LCO, wt% | | 12.42 | 11.59 | 6.71 |
| HCO, wt% | | 4.83 | 4.24 | 1.99 |
| Octane Number** | | 89.95 | 88.38 | 83.52 |

| | | | | |
|---|---|---|---|---|
| *: Conversion - conversion of 430°F⁺(221°C⁺) fraction to 430°F⁻(221°C⁻) **: Octane number, (R+M)/2, was estimated from detailed hydrocarbon GC of FCC gasoline. | | | | |

The results in Table 8 show that up to 20 volume % cofeeding of pyrolysis wax only makes very slight changes in the FCC unit performance indicating coprocessing of pyrolysis wax up to 20% is readily feasible. The 20 volume % blending of Sample E led to very slight reduction to no change of coke and dry gas yields, noticeable increase in LPG olefin yield, very slight increase in gasoline yield and slight decrease in LCO and HCO, which are all favorable in most situations. With paraffinic nature of pyrolysis wax, the 20% blend of Sample E lowered the Octane number slightly by 1.5 number. With refinery blending flexibility, this octane number debit can be easily compensated with minor blending adjustments.

The FCC run of 100% pyrolysis wax showed substantial increase in conversion, and debit of the Octane number by 6. This shows that coprocessing of pyrolysis wax is preferred over processing of 100% pyrolysis wax.

### Example 10: Feeding of LPG Olefins from FCC Unit, Which Coprocessed Waste Plastics Pyrolysis Product, to Refinery Alkylation Unit

Cofeeding of pyrolysis oil and/or wax to a FCC unit, as shown in Examples 8 and 9, produces a substantial amount of C₃ - C₅ olefins with a recycle content. The C₄ only or a C₄-C₅ stream containing recycled olefins is separated from FCC light-end recovery units, and then fed to an alkylation unit, as shown in Figure 4. In another embodiment, they can be blended into a gasoline pool. Reaction of LPG olefins and isobutane in the alkylation reactor produces propane, butane and alkylate gasoline with recycle contents. Alkylate gasoline and butane are valuable gasoline blending components. The clean butane and naphtha stream from the alkylation unit is a valuable feedstock for a steam cracker.

### Example 11: Feeding of Recycled C₃ LPG Stream to Steam Cracker for Ethylene Production, Followed by Productions of Polyethylene Resin and Polyethylene Consumer Products

Instead of sending all LPG olefin streams to the alkylation reactor, the C₃ LPG stream containing propane and propylene, produced via cofeeding of pyrolysis products to a FCC unit, can be separated and fed to a steam cracker for production of ethylene with a recycle content, as shown in Figure 2. Alternatively, only n-butane and/or naphtha stream from the alkylation plant could be fed to the steam cracker to produce ethylene. The ethylene is then processed to a polymerization unit to produce polyethylene resin containing some recycled-polyethylene/ polypropylene derived materials while the quality of the newly produced polyethylene is indistinguishable to the virgin polyethylene made entirely from virgin petroleum resources. The polyethylene resin with the recycled material is then further processed to produce various polyethylene products to fit the needs of consumer products. These polyethylene consumer products now contains chemically recycled, circular polymer while qualities of the polyethylene consumer products are indistinguishable from those made entirely from virgin polyethylene polymer. These chemically recycled polymer products are different from the mechanically recycled polymer products whose qualities are inferior to the polymer products made from virgin polymers.

The foregoing examples together clearly show a new effective way to recycle a large quantity of polyethylene and polypropylene derived waste plastics via chemical recycling through pyrolysis followed by cofeeding of the pyrolysis products in a refinery via efficient integration. This integration allows quality fuels and circular polymer productions.

As used in this disclosure the word "comprises" or "comprising" is intended as an open-ended transition meaning the inclusion of the named elements, but not necessarily excluding other unnamed elements. The phrase "consists essentially of" or "consisting essentially of" is intended to mean the exclusion of other elements of any essential significance to the composition. The phrase "consisting of" or "consists of" is intended as a transition meaning the exclusion of all but the recited elements with the exception of only minor traces of impurities.

It will be understood that certain of the above-described structures, functions, and operations of the above-described embodiments are not necessary to practice the present invention and are included in the description simply for completeness of an exemplary embodiment or embodiments. In addition, it will be understood that specific structures, functions, and operations set forth in the above-described referenced patents and publications can be practiced in conjunction with the present invention, but they are not essential to its practice. It is therefore to be understood that the invention may be practiced otherwise that as specifically described without actually departing from the scope of the present invention as defined by the appended claims.

## Claims

1. A continuous process for converting waste plastic into recycle for polyethylene polymerization comprising:
(a) selecting waste plastics containing polyethylene and/or polypropylene;
(b) passing the waste plastics from (a) through a pyrolysis reactor to thermally crack at least a portion of the polyolefin waste and produce a pyrolyzed effluent;
(c) separating the pyrolyzed effluent into offgas, char and a pyrolysis oil comprising a naphtha/diesel fraction and a heavy fraction;
(d) passing the pyrolysis oil to a refinery FCC unit;
(e) recovering a liquid petroleum gas C₄ olefin/paraffin mixture fraction comprising butanes and butenes from the FCC unit;
(f) passing the liquid petroleum gas C₄ olefin/paraffin mixture fraction to an alkylation unit;
(g) recovering n-butane and a portion of naphtha fraction from the alkylation unit; and
(h) passing the n-butane and a portion of naphtha fraction to a steam cracker for ethylene production.

2. The process of claim 1, wherein a gasoline and heavy fraction is recovered from the refinery FCC unit.

3. The process of claim 1, wherein an alkylate gasoline fraction is recovered from the refinery alkylation unit.

4. The process of claim 2, wherein the gasoline recovered from the refinery FCC unit is combined with an alkylate gasoline fraction recovered from the alkylation unit.

5. The process of claim 1, wherein at least some contaminants are removed from the recovered pyrolysis oil of step (c) before the oil is passed to the FCC unit in (d).

6. The process of claim 1, wherein the waste plastics selected in (a) are from plastics classification group 2, 4, and/or 5.

7. The process of claim 4, wherein the amount of gasoline produced by the FCC and alkylation units is increased with recycled pyrolysis oil.

8. The process of claim 1, wherein ethylene produced in (h) is subsequently polymerized.

9. The process of claim 8, wherein polyethylene products are prepared from the polymerized ethylene.

10. The process of claim 1, further comprising collecting a C₃ olefin/paraffin mixture fraction from the FCC unit and passing the fraction to a steam cracker for ethylene production.

## Patentansprüche

1. Kontinuierliches Verfahren zur Umwandlung von Kunststoffabfall zu Wiederverwertungsmaterial für Polyethylenpolymerisation, umfassend:
(a) Auswählen von Kunststoffabfall, der Polyethylen und/oder Polypropylen enthält;
(b) Leiten des Kunststoffabfalls aus (a) durch einen Pyrolysereaktor zum thermischen Cracken wenigstens eines Teils des Polyolefinabfalls und Erzeugen eines pyrolysierten Abstroms;
(c) Trennen des pyrolysierten Abstroms in Abgas, Kohle und ein Pyrolyseöl, das eine Naphtha-/Dieselfraktion und eine schwere Fraktion umfasst;
(d) Leiten des Pyrolyseöls zu einer Raffinerie-FCC-Einheit;
(e) Gewinnen einer flüssigen Petroleumgas-C₄-Olefin/Paraffin-Mischfraktion, die Butane und Butene umfasst, aus der FCC-Einheit;
(f) Leiten der flüssigen Petroleumgas-C₄-Olefin/Paraffin-Mischfraktion zu einer Alkylierungseinheit;
(g) Gewinnen von n-Butan und einem Teil der Naphthafraktion aus der Alkylierungseinheit; und
(h) Leiten des n-Butans und eines Teils der Naphthafraktion zu einem Dampfcracker zur Ethylenherstellung.

2. Verfahren gemäß Anspruch 1, wobei eine Benzin- und schwere Fraktion aus der Raffinerie-FCC-Einheit gewonnen wird.

3. Verfahren gemäß Anspruch 1, wobei eine Alkylat-Benzinfraktion aus der Raffinerie-Alkylierungseinheit gewonnen wird.

4. Verfahren gemäß Anspruch 2, wobei das aus der Raffinerie-FCC-Einheit gewonnene Benzin mit einer aus der Alkylierungseinheit gewonnenen Alkylat-Benzinfraktion kombiniert wird.

5. Verfahren gemäß Anspruch 1, wobei wenigstens manche Verunreinigungsstoffe aus dem gewonnenen Pyrolyseöl von Schritt (c) entfernt werden, bevor das Öl bei (d) zu der FCC-Einheit geleitet wird.

6. Verfahren gemäß Anspruch 1, wobei der bei (a) ausgewählte Kunststoffabfall aus der Kunststoff-Klassifizierungsgruppe 2, 4 und/oder 5 stammt.

7. Verfahren gemäß Anspruch 4, wobei die Menge an Benzin, die durch die FCC- und Alkylierungseinheiten produziert wird, mit recyceltem Pyrolyseöl erhöht wird.

8. Verfahren gemäß Anspruch 1, wobei bei (h) hergestelltes Ethylen anschließend polymerisiert wird.

9. Verfahren gemäß Anspruch 8, wobei aus dem polymerisierten Ethylen Polyethylenprodukte hergestellt werden.

10. Verfahren gemäß Anspruch 1, ferner umfassend das Sammeln einer C₃-Olefin/Paraffin-Mischfraktion aus der FCC-Einheit und Leiten der Fraktion zu einem Dampfcracker zur Ethylenherstellung.

## Revendications

1. Procédé continu pour la conversion de déchets plastiques en recyclage pour la polymérisation de polyéthylène comprenant :
(a) la sélection de déchets plastiques contenant du polyéthylène et/ou du polypropylène ;
(b) le passage des déchets plastiques de (a) à travers un réacteur de pyrolyse pour craquer thermiquement au moins une partie des déchets de polyoléfine et produire un effluent pyrolysé ;
(c) la séparation de l'effluent pyrolysé en gaz d'échappement, charbon et une huile de pyrolyse comprenant une fraction de naphta/diesel et une fraction lourde ;
(d) le passage de l'huile de pyrolyse à une unité FCC de raffinerie ;
(e) la récupération d'une fraction de mélange d'oléfine en C₄ de gaz de pétrole liquide/paraffine comprenant des butanes et des butènes de l'unité FCC ;
(f) le passage de la fraction de mélange d'oléfine en C₄ de gaz de pétrole liquide/paraffine à une unité d'alkylation ;
(g) la récupération de n-butane et d'une partie de fraction de naphta de l'unité d'alkylation ; et
(h) le passage du n-butane et d'une partie de la fraction de naphta dans un vapocraqueur pour la production d'éthylène.

2. Procédé selon la revendication 1, une fraction d'essence et lourde étant récupérée de l'unité FCC de raffinerie.

3. Procédé selon la revendication 1, une fraction d'essence d'alkylate étant récupérée de l'unité d'alkylation de raffinerie.

4. Procédé selon la revendication 2, l'essence récupérée de l'unité FCC de raffinerie étant combinée avec une fraction d'essence d'alkylate récupérée de l'unité d'alkylation.

5. Procédé selon la revendication 1, au moins une partie des contaminants étant éliminée de l'huile de pyrolyse récupérée dans l'étape (c) avant que l'huile ne soit passée à l'unité FCC en (d).

6. Procédé selon la revendication 1, les déchets plastiques choisis en (a) étant du groupe de classification de matières plastiques 2, 4 et/ou 5.

7. Procédé selon la revendication 4, la quantité d'essence produite par les unités FCC et d'alkylation étant augmentée avec de l'huile de pyrolyse recyclée.

8. Procédé selon la revendication 1, de l'éthylène produit en (h) étant subséquemment polymérisé.

9. Procédé selon la revendication 8, des produits de polyéthylène étant préparés à partir de l'éthylène polymérisé.

10. Procédé selon la revendication 1, comprenant en outre la collecte d'une fraction de mélange oléfine/paraffine en C₃ provenant de l'unité FCC et le passage de la fraction à un vapocraqueur pour la production d'éthylène.
